# EUROPÄISCHE PATENTSCHRIFT

(11) **EP 1 938 884 B1**
(45) Veröffentlichungstag und Bekanntmachung des Hinweises auf die Patenterteilung: **01.09.2010**
(21) Anmeldenummer: 07123995.8
(22) Anmeldetag: 21.12.2007
(51) Int. Cl.: B01D 46/24, B01D 46/00

(54) **Filtervorrichtung zum Entfernen von Feinstäuben aus einem staubbeladenen Gasstrom sowie Filteranlage**
Filter device for removing particulate matter from a gas flow loaded with particulate matter and filter system
Dispositif de filtre destiné à la suppression de poussières fines d'un flux de gaz chargé en poussière et installation de filtre

(30) Priorität: 21.12.2006 DE 102006061814
(43) Veröffentlichungstag der Anmeldung: 02.07.2008
(73) Patentinhaber: Infastaub GmbH, 61348 Bad Homburg (DE)
(72) Erfinder: Hungershausen, Walter, 65550, Limburg (DE); Klein, Matthias, 61440, Oberursel (DE); Haag, Joachim, 61250, Usingen (DE)
(74) Vertreter: Blasberg, Tilo

(56) Entgegenhaltungen:
- EP-A- 0 398 091
- EP-A- 0 860 192
- DE-A1- 2 637 559
- US-B1- 6 214 077

## Beschreibung

### Gebiet der Erfindung

Die vorliegende Erfindung betrifft eine Filtervorrichtung gemäß dem Oberbegriff von Anspruch 1. Insbesondere betrifft die vorliegende Erfindung eine Filtervorrichtung zur bevorzugt kontinuierlichen Abscheidung von feinsten Staubpartikeln (Schwebstoffen), insbesondere zum Einsatz zur Entstaubung von Staub-Luftströmen, die mit hoch dosierten Wirkstoffen beladen sind, bzw. allgemein zum Einsatz bei Staub-Luftströmen mit gefährlichen Stäuben, beispielsweise toxischen, kanzerogenen, radioaktiven oder anderen gesundheitsgefährdenden Stäuben.

### Hintergrund der Erfindung

Hierzu werden Filtersysteme mit Abscheideeinrichtungen (Filtereinsätzen) ausgerüstet, die Staubabscheideleistungen im Bereich der Filterklassen nach EN1822 zwischen H10 bis H14 (HEPA) und U15 bis U17 (ULPA) ermöglichen. Außerdem ist aus dem Stand der Technik bekannt, solche Filtersysteme so auszuführen, dass der Austausch erschöpfter (verbrauchter) und kontaminierter Filtereinsätze und auch des gesammelten Staubs für den Bediener gefahrlos, das heißt berührungs- und kontaminationsfrei, erfolgen kann.

Filtervorrichtungen der vorgenannten Art bestehen üblicherweise aus zumindest zwei nacheinander angeordneten Filterstufen, die von dem staubbeladenen Gasstrom mit gleicher Durchströmungsrichtung durchströmt werden. Die zweite Filterstufe dient dabei üblicherweise als nachgeordneter Sicherheitsfilter (statisches Filterelement), um einerseits die Staubabscheidung zu erhöhen und andererseits evtl. Betriebsstörungen der ersten Filterstufe aufzufangen und die Filtervorrichtung hinsichtlich unzulässiger Reststaubemissioncn in die Umwelt zu sichern.

Um eine kontinuierliche Betriebsweise zu erzielen, kann die erste Stufe automatisch regenerierend ausgelegt werden. Die Regenerierung bzw. automatische Reinigung der Filtereinsätze erfolgt dabei mittels Druckstößen von Druckluft oder Stickstoff oder durch Blaswirkung im Gegenstromprinzip mittels einer druck- oder zeitabhängigen Steuerung in bestimmten Intervallen. Zur Sedimentation der Schwebstoffe wird dazu kurzzeitig ein betreffendes Filtermodul aus dem Gas-Luftstrom geschaltet und der Volumenstrom zusätzlich auf die anderen Module verteilt. Nach Abreinigung und Staubberuhigung wird das Filtermodul wieder zugeschaltet und ein anderes Filtermodul ebenso automatisch gereinigt.

Der Firmenprospekt "INFA-JET Taschenfilter für kontinuierliche Betriebsweise", AJN 3.000/1.99 der Anmelderin offenbart eine Filtervorrichtung mit zwei unmittelbar aufeinander folgenden Filterstufen. In der ersten Filterstufe sind mehrere Filtertaschen in einem Filterstützrahmen angeordnet. Die zweite Filterstufe ist als Filterkassette wie vorstehend beschrieben ausgebildet.

DE 30 01 289 A1 offenbart eine Filteranlage zum Einsatz bei der Demontage von nukleartechnischen Anlagen, insbesondere Atommeilern. Dabei sind die Filterelemente in nacheinander durchströmten tonnenförmigen Abfallbehältern angeordnet. Geeignet Wechselvorriehtungcn sorgen für einen Kontaminationsschutz beim Austausch der Abfallbehälter, beispielsweise wenn das darin enthaltene Filterelement verbraucht ist. Die Filterstufen sind jedoch nicht als Filterkammern ausgebildet, in denen die Filterelemente mittels eines abgedichteten Sitzes aufgenommen sind. Die Filterelemente können auch nicht unmittelbar, d.h, ohne vorheriges Abtrennen der Abfallbehälter von der Filteranlage, in die Abfallbehälter eingesetzt oder aus diesen herausgenommen werden.

Aufgrund der üblicherweise zylindrischen Geometrie der tonnenförmigen Staubsammelbehälter kann ein berührungs- und kontaminationsfreier Austausch der verbrauchten Filterelemente und die Entsorgung des gesammelten Staubs nicht unter Verwendung derselben Entsorgungseinrichtungen bewerkstelligt werden, was Betriebs- und Wartungskosten einer Filteranlage erhöht.

Aus dem Stand der Technik sind auch Filtersysteme bekannt, die zwei- oder mehrstufig Staub abscheiden und bei denen die erste Filterstufe aus einem Gewebe- oder Patroncnfilterelement oder anderem Filterelement besteht, jedoch die zweite Filterstufe als quaderförmiges HEPA-Filterelement, insbesondere Filterkassette, ausgelegt ist. Die Geometrie der Filtereinsätze der ersten und zweiten Stufe ist somit unterschiedlich. Ein berührungs- und kontaminationsfreier Wechsel von verbrauchten Filterelementen der beiden Filterstufen kann somit nicht mit Hilfe derselben Wechseleinrichtung und Vorgehensweise bewerkstelligt werden.

Zylindrische Filterpatronen sind im Stand der Technik zur Verwendung als Ölfilter (vgl. EP1 379 318 B1), als Luftfilter für Kraftfahrzeuge (vgl. EP 0 740 574 B1) und als Flüssigkeitsfilter (vgl. DE 100 38 412 A1) bekannt.

Der Firmenprospekt "FNFA-MICRON Kassettenfilter", MKR 8.000/1.95 der Anmelderin offenbart eine Filtervorrichtung mit einer ersten Filtervorstufe und einer dieser nachgeordneten zweiten Filterstufe, die als Sicherheitsfilter dient. Beide Filterstufen werden in derselben Strömungsrichtung durchströmt. Die Filterstufen sind als quaderförmige Kassettenfilter ausgebildet, die berührungs- und kontaminationsfrei gewechselt werden können. Die Abreinigung der Filterkassette der ersten Filterstufe erfolgt pneumatisch, indem ein über einen pneumatischen Zylinder bewegtes Düsenrohr langsam über die gesamte Breite und Länge der Filterkassette vor- und zurückbewegt wird und dabei ständig mittels Druckluft die Filterkassette nach unten hin, das heißt zu einem Staubsammclbehalter hin, ausbläst und vom Staub befreit. Die erzielte Staubrückhaltung ist jedoch limitiert, insbesondere weil die Filterstufen gleichsinnig durchströmt werden und die Filterwirkung der verwendeten Kassettenfilter limitiert ist. Weitere Einschränkungen ergeben sich aufgrund eines nicht immer einfachen Handlings der Kassettenflilter, insbesondere bei deren Austausch.

DE 26 37 559 A1 offenbart eine Filtervorrichtung gemäß dem Oberbegriff von Anspruch 1, mit zwei Filterkammern, die nacheinander durchströmt werden und über ein Trennblech in zwei Filterkammer-Unterabschnitte unterteilt sind, die nacheinander durchströmt werden. Über einen Staubluftkanal strömt staubbeladene Luft in einen ersten Filterkammer-Unterabschnitt ein und durchströmt dabei eine Vorfilterpatrone. Anschließend strömt die vorgefilterte Luft durch einen Spalt zwischen dem Trennblech und dem Boden der Anlage in den zweiten Filterkammer-Unterabschnitt, wo eine weitere Feinfilterpatrone durchströmt wird. Bei dieser Anordnung sind die beiden Filterkammer-Unterabschnitte durchverbunden, nicht jedoch über ein Trennblech voneinander getrennt Eine Abreinigung der Filterpatronen ohne Entnahme der Filterpatronen aus der Filterkammer ist nicht offenbart.

EP 0 398 091 A1 offenbart eine Filteranlage mit nur einer Filterkammer, in der mehrere zylindrische Filterpatronen vertikal übereinander gestapelt und in zwei zueinander parallelen Säulen angeordnet sind, wobei an beiden Enden der Filterpatronen ein abgedichteter Sitz ausgebildet ist. Offenbart ist auch eine Abreinigung der Filterpatronen ohne Entnahme aus der Filterkammer mit Hilfe von Druckstößen, die mittels Blasdüsen in das Innere der Filterpatronen eingeblasen werden.

### Zusammenfassung der Erfindung

Aufgabe der vorliegenden Erfindung ist es, eine Filtervorrichtung bereitzustellen, die sich bei hoher Filterleistung durch ein vorteilhaft einfaches und kostengünstiges Reinigungsverhalten sowie eine einfache und kostengünstige Entsorgung sowohl von verbrauchten Filterelementen als auch des gesammelten Staubs auszeichnet. Gemäß einem weiteren Gesichtspunkt der vorliegenden Erfindung soll ferner eine Filteranlage mit einer Mehrzahl von Filtervorrichtungen der vorgenannten Art bereitgestellt werden.

Diese und weitere Aufgaben werden gemäß der vorliegenden Erfindung durch eine Filtervorrichtung mit den Merkmalen nach Anspruch 1 sowie durch eine Filteranlage nach Anspruch 15 gelöst. Weitere vorteilhafte Ausführungsformen sind Gegenstand der rückbezogenen Unteransprüche.

Somit geht die vorliegende Erfindung aus von einer Filtervorrichtung zum Entfernen von Feinstäuben aus einem staubbeladenen Gasstrom, insbesondere von gefährlichen, beispielsweise toxischen, kanzerogenen, radioaktiven oder lungengängigen, Stäuben, die zumindest zwei nacheinander von dem Gasstrom durchströmte Filterstufen aufweist, die als voneinander getrennte Filterkammern ausgebildet sind, in denen jeweils zumindest ein wechselbares Filterelement zum Filtern des Gasstroms vorgesehen sind.

Erfindungsgemäß sind die Filterelemente als zylindrische Filterpatronen ausgebildet, die von außerhalb der Filtervorrichtung her unmittelbar in die Filterstufen einsetzbar und herausnehmbar sind, insbesondere ohne aufwändige Demontage der Filtervorrichtung. Die Filterpatronen sind vielmehr erfindungsgemäß von außerhalb der Filterkammern bevorzugt unmittelbar zugänglich, was einen raschen und unkomplizierten Wechsel ermöglicht.

Somit können erfindungsgemäß für den Wechsel der zylindrischen Filterpatronen grundsätzlich dieselben Vorrichtungen verwendet bzw. Vorkehrungen getroffen werden wie zum Austausch der üblicherweise stets zylindrischen Staubsammelbehälter. Somit können erfindungsgemäß dieselben berührungs- und kontaminationsfreien Sackwechseltechniken (Bag-in-Bag-out) verwendet werden, so dass eine einfache und kostengünstige Entsorgung von verbrauchten Filterpatronen ermöglicht ist. Bevorzugt ist dabei im Bereich eines abnehmbaren Verschlussdeckels des Gehäuses einer Filterkammer ein umlaufender Wechselsack-Haltekragen zum berührungs- und kontaminationsfreien Wechsel einer verbrauchten Filterpatrone vorgesehen. Dabei sind Geometrie und Größe des Wechselsack-Haltekragens bevorzugt gleich der Geometrie und Größe eines Rohranschlussstücks, welches einen Staubsammelbehälter zum Sammeln des herausgefilterten Staubs mit der Filtervorrichtung verbindet.

Erfindungsgemäß ist an beiden Enden der Filterpatronen ein abgedichteter Sitz bewirkt, sodass die Filterpatronen an beiden Enden in den Filterkammern fixiert und staubdicht abgedichtet sind. Dadurch wird in vorteilhaft einfacher Weise eine zuverlässige Abdichtung gegen die Umgebung, gleichzeitig jedoch auch gegen die zugeordnete Filterkammer, in der die Filterpatronen angeordnet sind, bewerkstelligt.

Wie nachfolgend ausführlicher dargelegt, ermöglicht die ausschließliche Verwendung von zylindrischen Filterpatronen eine Reihe weiterer Vorteile in Betrieb und Wartung von zwei-oder mehrstufigen Entstaubungsanlagen. Insbesondere lässt sich aufgrund der Verwendung von zylindrischen Filterpatronen erfindungsgemäß eine hohe, gleichmäßige Filterwirkung mit einem kompakten und leicht zu wartenden Aufbau der Filtervorrichtung erzielen. Weitere Vorteile ergeben sich aufgrund eines erheblich einfacheren und zuverlässigeren Handlings der zylindrischen Filterpatronen, insbesondere beim Wechsel von verbrauchten Filterpatronen. Insbesondere lassen sich so erfindungsgemäß sehr kurze Stand- und/oder Wartungszeiten der Filtervorrichtung bei Wartung oder Wechsel von verbrauchten Filterpatronen realisieren.

Gemäß einer weiteren bevorzugten Ausführungsform werden die Filterpatronen in unmittelbar aufeinander folgenden Filterstufen in jeweils umgekehrter Richtung durchströmt. Durch das Filtermaterial der zylindrischen Filterpatronen und die vorgenannte Abdichtung an den Enden der Filterpatronen werden die Filterkammern jeweils in staubbeladene Halbräume und reingasseitige Halbräume unterteilt. Je nach Strömungsrichtung des Gasstroms, das heißt in Bezug zu dem Filtermaterial entweder von außen nach innen oder von innen nach außen gerichtet, kommt es zur Anlagerung der gefilterten Stäube auf der Außenumfangswand bzw. Innenumfangswand des Filtermaterials. Nie wird sich der herausgefilterte Staub in zwei aufeinander folgenden Filterstufen auf derselben Seite der vorgenannten Halbräume ablagern. Dies kann erfindungsgemäß für eine einfache und kostengünstige Abreinigung der Filterpatronen ausgenutzt werden, da beim Einwirken von Druckstößen oder bei einer Blaswirkung im Gegenstromprinzip Staub, der von der Außenseite einer stromaufwärts oder stromabwärts befindlichen Filterpatrone abgereinigt wird, allenfalls in den Innenraum einer stromaufwärts bzw. stromabwärts befindlichen Filterpatrone gelangen kann, nicht jedoch auf deren Außenseite.

Gemäß einer weiteren bevorzugten Ausführungsform werden dabei die Filterpatronen in der ersten Filterstufe von außen nach innen und die Filterpatronen in der zweiten Filterstufe von innen nach außen, das heißt in umgekehrter Richtung, durchströmt.

Gemäß einer weiteren Ausführungsform sind die Filterstufen als voneinander getrennte Filterkammern ausgebildet, in denen beide Enden der jeweiligen Filterpatronen fixiert und staubdicht abgedichtet sind, wobei an einem Ende der Filterpatronen für den Gasstrom ein ungehinderter Zutritt bzw. Austritt in den bzw. aus dem Innenraum der zylindrischen Filterpatronen vorgesehen ist. Dadurch werden in einfacher Weise definierte Betriebsverhältnisse realisiert, denn der staubbeladene Gasstrom kann nur durch das Filtermaterial in der zylindrischen Umfangswand der Filterpatronen durchströmen, um gefiltert zu werden. Dies ermöglicht in einfacher Weise die Bereitstellung von staubbeladenen Kammerbereichen, die dem zu filternden Rohgas ausgesetzt sind, und hiervon über das Filtermaterial getrennten Reingaskammerbereichen, was erfindungsgemäß erhebliche Vorteile zur Abreinigung der Filterelemente und bei Betrieb und Wartung der Filtervorrichtung ermöglicht. Zur staubdichten Abdichtung werden dabei bevorzugt Dichtringe auf den Stirnseiten oder am Umfang der Filterpatronen verwendet. Gemäß einer weiteren Ausführungsform sind die Filterpatronen dabei in den Filterkammern sowohl zu einer roh-oder reingasseitigen Gehäusewand als auch zur Umgebung hin abgedichtet angeordnet.

Gemäß einer weiteren Ausführungsform ist an zumindest einem Ende der Filterpatronen ein Spann- und/oder Verriegelungsmechanismus vorgesehen, der von außerhalb der jeweiligen Filterkammer her berührungs- und kontaminationsfrei betätigbar ist, um die zugeordnete Filterpatrone gegen eine Wand der Filterkammer vorgespannt zu halten. Insbesondere finden dabei mechanische oder pneumatische Spann- und/oder Verriegelungsmechanismen Anwendung, die von außerhalb der Filtervorrichtung bzw. von einer Reingaskammer her betätigt werden können. Grundsätzlich können auch ferngesteuerte elektrisch betriebene Spann- und/oder Verriegelungsmechanismen verwendet werden. Insgesamt wird somit eine staubdichte Abdichtung an dem jeweiligen Ende der Filterpatronen ermöglicht.

Bevorzugt wirkt ein solcher Spann- und/oder Verriegelungsmechanismus formschlüssig mit dem zugeordneten Ende der Filterpatronen zusammen. Insbesondere können auf einem stirnseitigen Umfangsrand der Filterpatronen gegenüber liegend dem Spann- und/oder Verriegelungsmechanismus Formschlussgebilde, wie beispielsweise Ausnehmungen oder Vorsprünge, vorgesehen sein, die mit korrespondierend ausgebildeten Formschlussgebilden, insbesondere Verriegelungsklauen oder Verriegelungsaufnahmen des Spann- und/oder Verriegelungsmechanismus formschlüssig zusammenwirken, um das jeweiligen Ende an der zugeordneten Wand zu fixieren. Bevorzugt wird dabei zwischen dem stirnseitigen Umfangsrand und der zugeordneten Wand der Filterkammer ein elastisches Dichtungselement geklemmt gehalten, um einen Filterinnenraum gegen die zugeordnete Filterkammer abzudichten.

Dabei kann an der zugeordneten Wand im Bereich des Dichtungselements eine Dichtsitzprüfeinrichtung vorgesehen sein, beispielsweise eine Ringnut, die mit einem Über-oder Unterdruck beaufschlagt werden kann, so dass ein Messgerät einen Druckabfall bzw. Druckanstieg des Über- bzw. Unterdrucks als Anzeichen für eine Undichtigkeit detektieren kann.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1: in einer perspektivischen Rückansicht eine Filtervorrichtung gemäß der vorliegenden Erfindung;
- Fig. 2: die Filtervorrichtung gemäß der Fig. 1 in einer perspektivischen Vorderansicht;
- Fig. 3: die Führung der Gasströmung in der Filtervorrichtung gemäß der Fig. 1;
- Fig. 4: in einer schematischen Schnittansicht die Fixierung einer zylindrischen Filterpatrone in einer Filterkammer der Filtervorrichtung gemäß der Fig. 1;
- Fig. 5: in einem vergrößerten Teilschnitt die mit dem oberen Ende der Filterpatrone gemäß der Fig. 4 zusammen wirkende Spannvorrichtung;
- Fig. 6: in einer perspektivischen Darstellung eine zylindrische Filterpatrone gemäß der vorliegenden Erfindung;
- Fig. 7: in einer perspektivischen Darstellung die Fixierung der Filterpatrone gemäß der Fig. 6 in einer Filterkammer der Filtervorrichtung gemäß der vorliegenden Erfindung;
- Fig. 8: die Anordnung gemäß der Fig. 7 in einer perspektivischen Vorderansicht;
- Fig. 9: in einem vergrößerten Teilschnitt die Fixierung des Bodens der zylindrischen Filterpatrone gemäß der Fig. 4;
- Fig. 10: in einer teilperspektivischen Darstellung eine Vorrichtung zum automatischen Abreinigen einer zylindrischen Filterpatrone durch Druckstöße oder Blaswirkung im Gegenstromprinzip; und
- Fig. 11: in einer perspektivischen Rückansicht eine Filteranlage gemäß der vorliegenden Erfindung mit zwei Filtervorrichtungen gemäß der Fig. 1.

In den Figuren bezeichnen identische Bezugszeichen identische oder im Wesentlichen gleichwirkende Elemente und Elementgruppen.

### Ausführliche Beschreibung von bevorzugten Ausführungsbeispielen

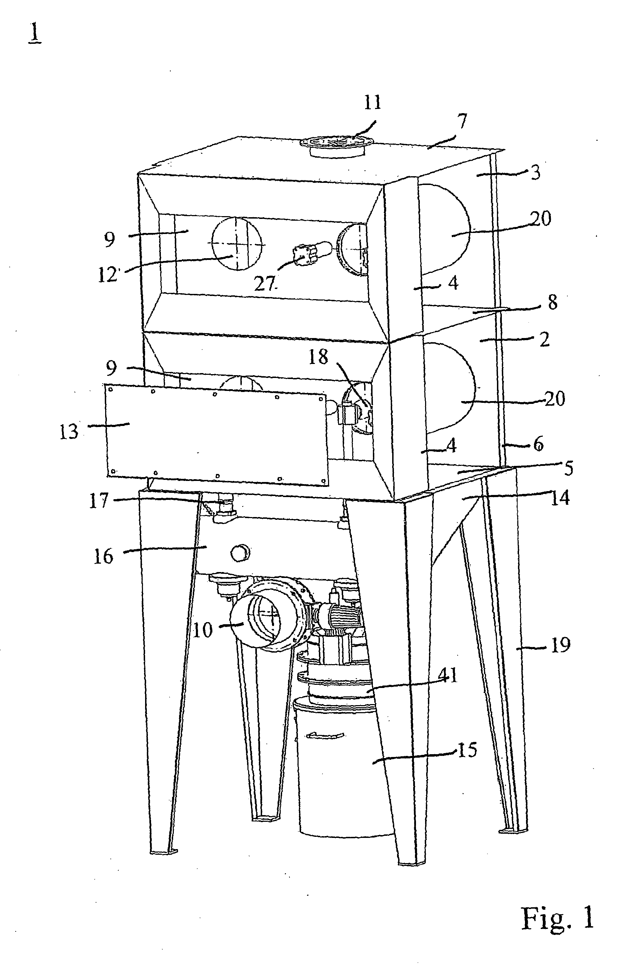

Gemäß der Fig. 1 weist das Filtermodul 1 eine erste Filterstufe 2 und eine nachgeordnete zweite Filterstufe 3 auf, die nacheinander von dem zu filternden Gasstrom durchströmt werden. Die beiden Filterkammern 2,3 sind über ein Trennblech 8 voneinander getrennt und werden von einer vorderen Wand 6, dem Deckel 7 bzw. Trennblech 8, der Innenwand 5 des Staubsammeltrichters 14, von nicht dargestellten Seitenwänden und von den rückseitigen Trennblechen 9 begrenzt. Wie nachfolgend ausführlicher dargelegt, sind in den Filterkammern 2, 3 zylindrische Filterpatronen 20 an den beiden Enden staubdicht abgedichtet und in horizontaler Ausrichtung angeordnet. In den rückseitigen Trennblechen 9 sind Öffnungen 12 ausgebildet, so dass der zylindrische Innenraum der Filterpatronen 20 mit den vor den Filterkammern 2, 3 angeordneten Reingaskammern 4 kommuniziert. Das Modul ist auf ein Gestell 19 aufgeständert. Die erste Filterkammer 2 geht in einen konischen Staubsammeltrichter 14 über, der über ein Rohranschlussstück 41 mit einem zylindrischen Staubsammelbehälter 15 verbunden ist. Das gesamte Filtermodul 1 ist zur Umgebung hin abgedichtet, so dass ein Austritt von Staub verhindert ist.

Unterhalb des Filtermoduls 1 ist ein Vorratsbehälter 16 für Druckluft oder Stickstoff angeordnet, der über Leitungen 17 mit vor dem Mündungsbereich der Filterpatronen 20 angeordneten Injektordüsen 18 verbunden ist. Die Injektordüsen dienen der Abreinigung der Filterpatronen 20 durch Blaswirkung oder Druckimpulse nach dem Gegenstromprinzip. Im unteren Bereich des Filtermoduls 1 tritt das staubbeladene Rohgas über den Einlass 10 und eine Staubberuhigungsklappe in den Staubsammeltrichter 14 ein, in den ein Leitblech (nicht gezeigt) eingebaut ist, das bereits bei Einströmen des Staub-Gasgemisches einen Teil des Staubes abscheidet, der in den Staubsammelbehälter 15 herabfällt.

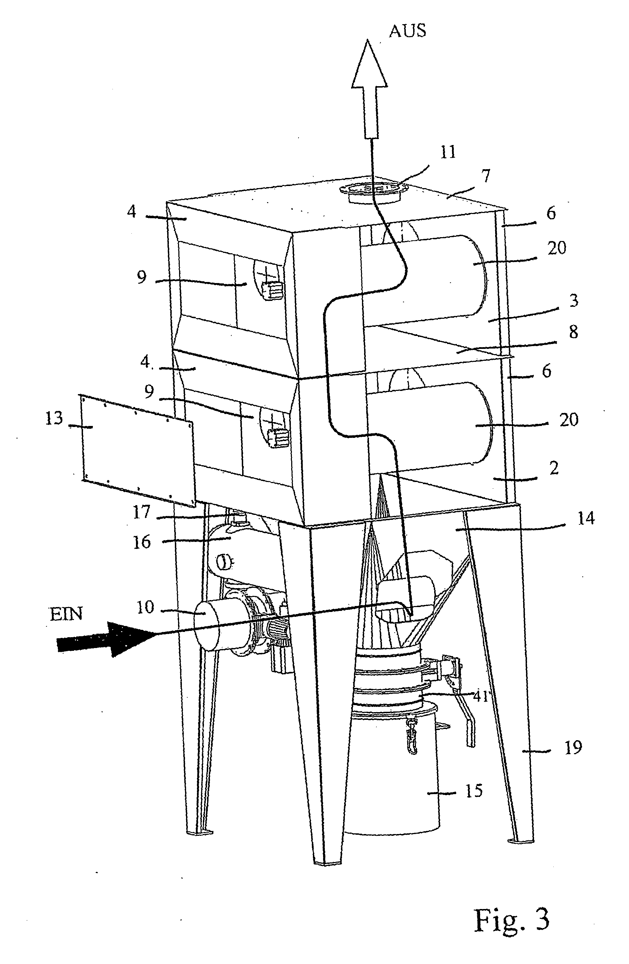

Das staubbeladene Gas tritt anschließend in der ersten Filterstufe 2 von außen nach innen durch die Filterpatronen 20 hindurch, strömt durch den Innenraum der zylindrischen Filterpatronen 20 und die Öffnungen 12 im rückseitigen Trennblech 9 in die untere Reingaskammer 4, strömt von dort in die obere Reingaskammer 4, anschließend durch die Öffnungen 12 im rückseitigen Trennblech 9 in den Innenraum der Filterpatronen 20 der zweiten Filterstufe 3 und durchströmt schließlich in umgekehrter Richtung, das heißt von innen nach außen, das Filtermaterial der Filterpatronen 20 der zweiten Filterstufe 3, um anschließend die zweite Filterstufe 3 durch den Reingasauslass 11 zu verlassen. Somit werden die Filterpatronen 20 in der ersten und zweiten Filterstufe 2, 3 in umgekehrter Richtung durchströmt. Die Fig. 3 fasst schematisch den vorstehend beschriebenen Strömungsverlauf zusammen. Grundsätzlich kann gemäß der vorliegenden Erfindung der Strömungsverlauf auch in umgekehrter Reihenfolge erfolgen.

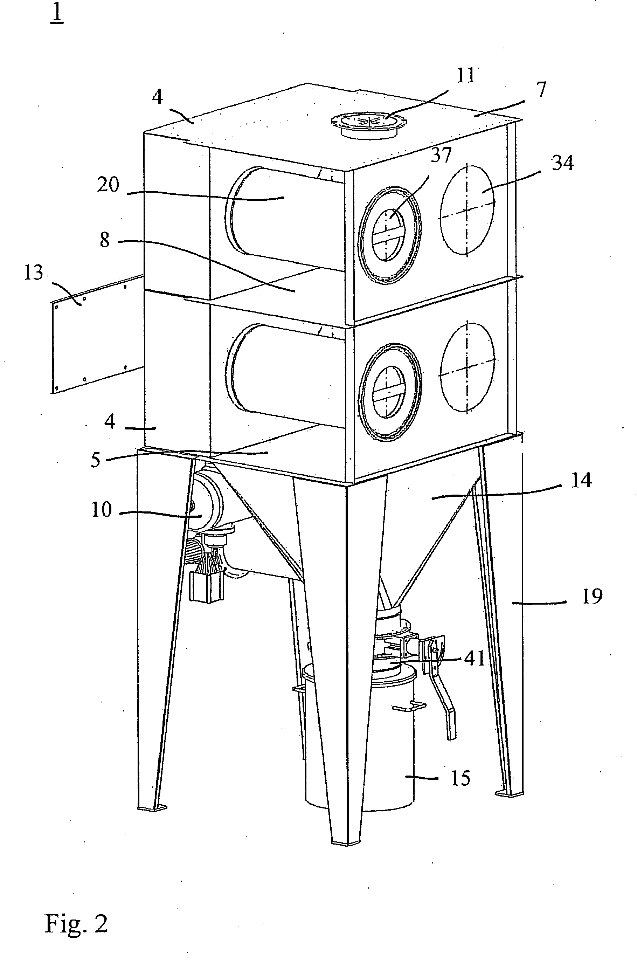

Die Fig. 2 zeigt das Filtermodul 1 in einer perspektivischen Vorderansicht. Erkennbar ist der Boden der zylindrischen Filterpatronen 20 durch ein Dichtblech 37 abgedeckt und staubdicht zur Umgebung sowie zur Roh- oder Reingasseite hin abgedichtet, wie nachfolgend ausführlicher beschrieben.

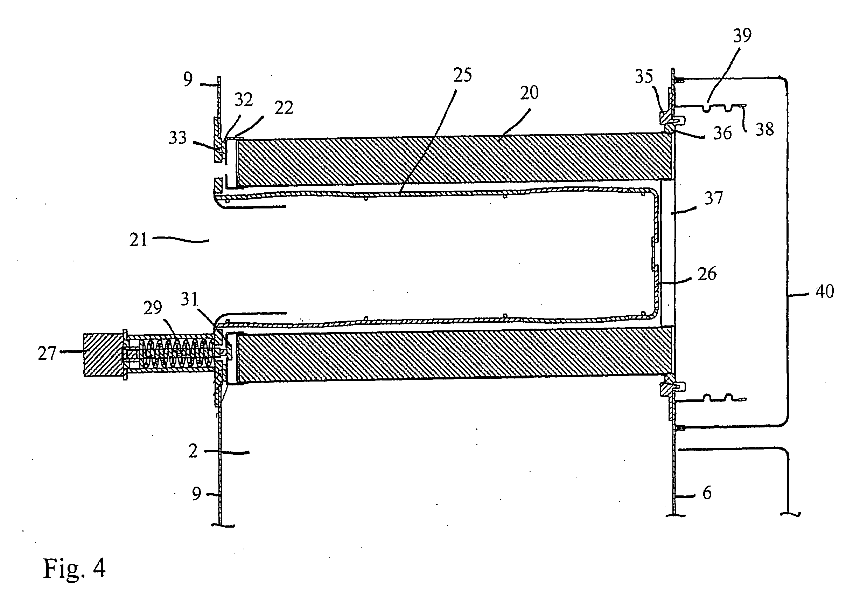

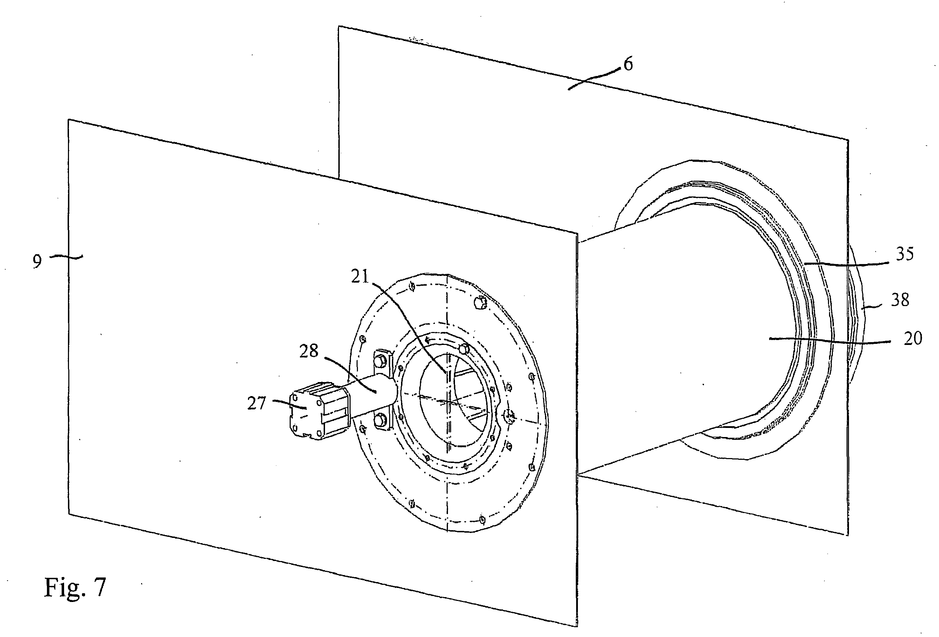

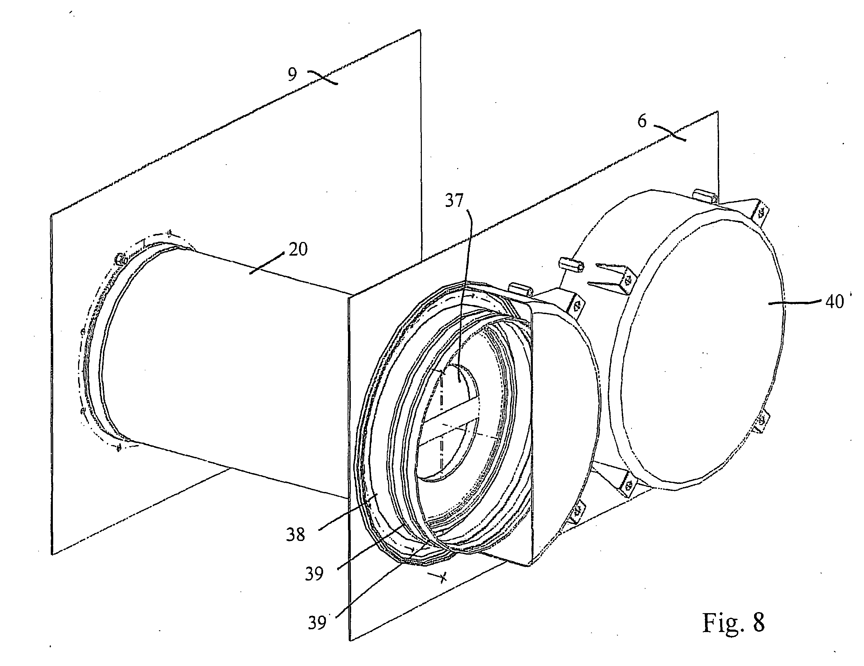

Weitere Einzelheiten der Fixierung der zylindrischen Filterpatronen in den Filterstufen 2, 3 werden nachfolgend anhand der Figuren 4 bis 9 beschrieben. Gemäß der Fig. 4 weist eine Filterpatrone einen zylindrischen Zentrierkäfig 25 aus einem gelochten Blech oder einem Metallsieb einer geeigneten Stärke auf, der das diesen zylindrisch umgebende Filtermaterial 20 abstützt. Das Filtermaterial ist grundsätzlich ähnlich bekannten Konstruktionen ausgeführt. Beispielsweise können als Filtermedium hochwertige Glasfaserpapiere mit verschiedenen Durchlass- bzw. Abscheidegraden eingesetzt werden, wobei als Vergussmasse beispielsweise dauerelastischer Kunststoff zum Einsatz gelangen kann. Selbstverständlich können auch beliebige andere Filtermaterialien eingesetzt werden, wie dem Fachmann beim Studium der vorliegenden Anmeldung ohne weiteres ersichtlich sein wird. An den beiden Enden der Filterpatrone sind jedoch besondere Vorkehrungen zur staubdichten Abdichtung getroffen.

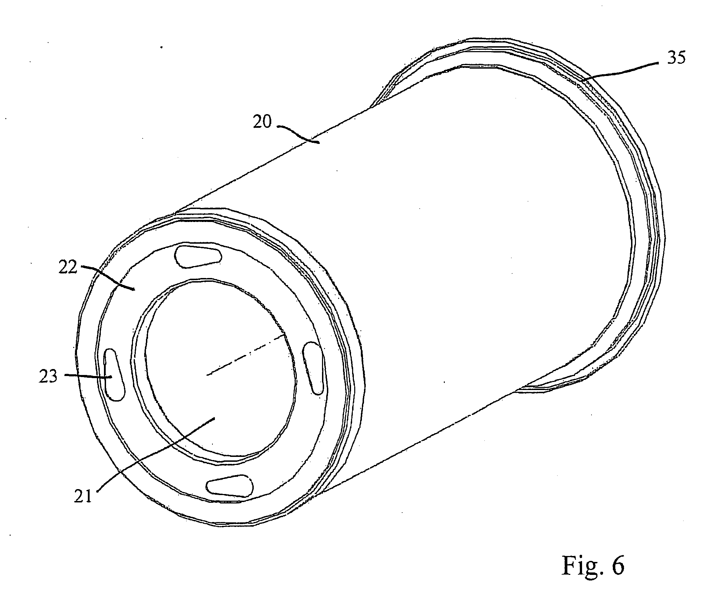

Gemäß der Fig. 4 geht das Filtermaterial 20 am stirnseitigen Ende nahe dem Mündungsbereich 21 in ein ringförmiges Kopfstück 22 über, das einerseits als Gegenfläche für einen Dichtring 32 dient und in welchem, wie in der Fig. 6 gezeigt, tränenförmige Aussparungen 23 zur Aufnahme von Haltemitteln ausgebildet sind. Diese Haltemittel können unbeweglich an der Trennwand 9 der Filterkammer 2 angeordnet sein, beispielsweise in Form von Haltefingern, auf welche das Kopfstück 22 in der Art eines Bajonettverschlusses beim Verdrehen der Filterpatrone in Eingriff gebracht wird. Bevorzugt, wie in der Fig. 4 dargestellt, sind die Haltemittel jedoch als Halteklauen eines Spann- und/oder Verriegelungsmechanismus 27 ausgeführt.

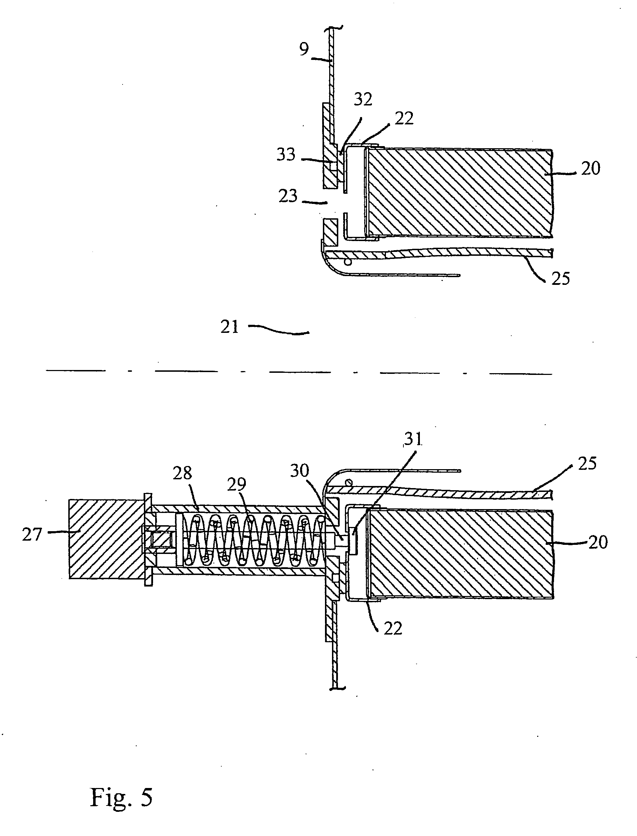

Gemäß der Figuren 4 und 5 weist der Spann- und/oder Verriegelungsmechanismus 27 ein Betätigungsende auf, dem sich ein zylindrisches Gehäuse 28 anschließt, in dem eine axial verstellbare Stange 30 mit einer an deren vorderem Ende ausgebildeten Klaue 31 sowie eine Druckfeder 28 aufgenommen sind. Durch Betätigen des Betätigungsendes der Spann-und/oder Verriegelungsmechanismus wird die Stange 30 mit der Klaue 31 zum rückseitigen Trennblech 9 der Filterstufe 2 abgezogen und dabei das Kopfstück 22 aufgrund des formschlüssigen Eingriffs der Klaue 31 gegen das rückseitige Trennblech 9 gezogen. Dadurch wird das zwischen dem rückseitigen Trennblech 9 und dem Kopfstück 22 befindliche Dichtelement, nämlich der Dichtring 32, geklemmt und die Filterpatrone 20 gegen das rückseitige Trennblech 9 vorgespannt gehalten. Im Mündungsbereich 21 ist somit die Filterkammer 2 staubdicht gegen den Innenraum der Filterpatrone abgedichtet. Wie dem Fachmann ohne weiteres ersichtlich sein wird, kann der vorstehend beschriebene mechanische Spann- und/oder Verriegelungsmechanismus 27 auch durch einen pneumatischen oder in beliebiger anderer Weise betätigbaren Mechanismus ersetzt werden.

Wie in der Fig. 5 gezeigt, ist zur Überprüfung der Dichtigkeit des Dichtungsrings 32 im Bereich des rückseitigen Trennblechs 9, insbesondere auf einem Adapterring zur Montage des Spann- und/oder Verriegelungsmechanismus 27, als Dichtsitzprüfeinrichtung eine Ringnut 33 ausgebildet, die mit einem Über- oder Unterdruck beaufschlagbar ist, so dass eine Undichtigkeit durch einen Druckabfall oder Druckanstieg in der Ringnut 33 detektiert werden kann.

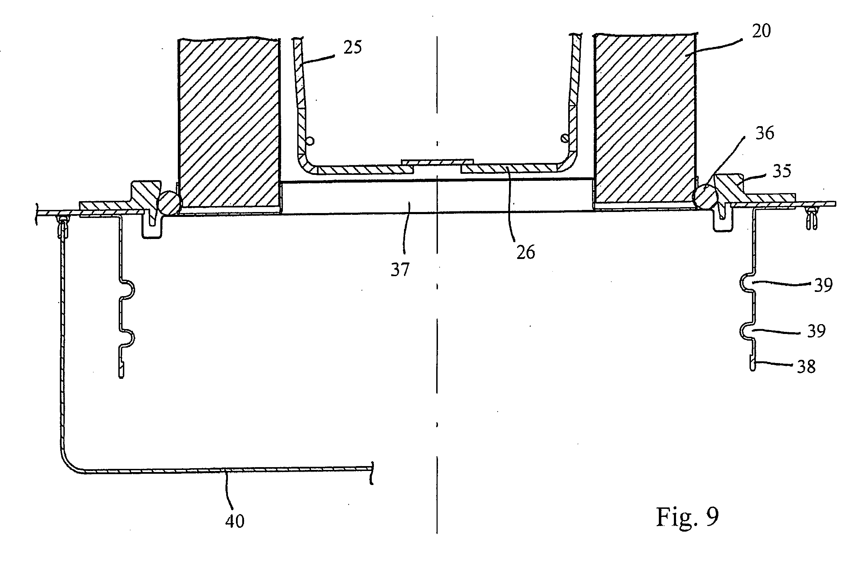

Gemäß den Figuren 4 und 9 ist die Filterpatrone 20 am anderen Ende gegen die Umgebung hin abgedichtet. Zu diesem Zweck ist das andere Ende der Filterpatrone 20 mit einem Dichtblech 37 verbunden, an welchem ein Dichtring 36 gehalten ist. In der vorderen Wand 6 der Filterkammer 2 ist eine Öffnung zum Herausnehmen der Filterpatrone 20, in der Fig. 4 von rechts her, ausgebildet. Wenn die Filterpatrone 20 in die Filterkammer eingesetzt ist, wie in der Fig. 4 dargestellt, wird diese Öffnung durch das Dichtblech 37 verschlossen und durch den Dichtring 36 abgedichtet. Zum Klemmen des Dichtrings 36 ist dabei auf der Innenseite der vorderen Wand 6 ein einwärts geneigter Dichtungsaufnahmering 35 vorgesehen. Durch Betätigen des Spann- und/oder Verriegelungsmechanismus 27 wird das eine Ende der Filterpatrone 20, wie vorstehend beschrieben, gegen die hintere Trennwand 9 gezogen. Gleichzeitig wird dadurch das entgegengesetzte Ende der Filterpatrone 20 mit dem Dichtblech 37 und der Richtung 36 gegen die vordere Trennwand 6 gezogen und so ein abgedichteter Sitz an beiden Enden bewirkt. Somit dient die in der Fig. 4 dargestellte Abdeckung 40 nicht einer eigentlichen Abdichtung der Filterkammer.

Die Filterpatrone 20 kann in der aus dem Stand der Technik bekannten Sackwechseltechnik (Bag-in-Bag-out) berührungs- und kontaminationsfrei gewechselt werden. Einzelheiten der Sackwechseltechnik sind beispielsweise in der Firmenbroschüre "INFA-MICRON kontaminationsfreier Kassettenwechsel", MKR, 8.200/1.94 der Anmelderin offenbart, deren Inhalt hiermit im Wege der Bezugnahme ausdrücklich mit beinhaltet sei. Genauer gesagt ist, wie in der Fig. 9 gezeigt, um die Entnahmeöffnung herum ein umlaufender Wechselsack-Haltekragen 38 mit zwei umlaufenden Sicken bzw. Nuten 39 vorgesehen. Im Betrieb kann dieser Wechselsack-Haltekragen 38 durch einen Verschlussdeckel 40 abgedeckt sein. Nach dem Einbringen der Filterpatrone in die Filterkammer wird die Einführöffnung durch das Dichtblech 37 verschlossen und anschließend ein Kunststoffsack auf dem Wechselkragen 38 mit Hilfe einer Gummischnur oder eines Spannbügels befestigt, die bzw. der in die hintere der beiden Sicken bzw. Nuten 39 eingreift.

Zum Wechsel einer verbrauchten Filterpatrone wird zunächst der Spann- und/oder Verriegelungsmechanismus 27 gelöst. Dabei drücken die Halteklauen 31 die Filterpatrone 20 von der Dichtung 32 und der Dichtungsaufnahme 35 weg. Anschließend kann die verbrauchte Filterpatrone 20 durch geringfügiges Drehen aus den Bajonettöffnungen 23 freigegeben werden und dann in den Kunststoffsack herausgezogen. Dabei kann der Kunststoffsack als Handschuh verwendet werden. Anschließend wird der Kunststoffsack zweifach abgebunden, nämlich einerseits an der vorderen Nut 39 des Wechselkragens 38 und andererseits ein Stück beabstandet davon. Während des Abbindevorgangs wird das System auf Unterdruck gebracht, damit die Filterpatrone nach dem Prinzip der Vakuumverpackung fest verschlossen und Raum sparend verpackt ist und keine Schadstoffe in die Umgebung gelangen können. Zwischen den beiden Abbindestellen wird der Kunststoffsack zerschnitten. Der Kunststoffsack mit der verbrauchten Filterpatrone muss einer Entsorgung zugeführt werden.

Anschließend wird der Sackrest entfernt und erfolgt der Einbau einer neuen Filterpatrone. Zu diesem Zweck wird die Gummischnur bzw. der Spannbügel des Sackrests von der hinteren in die vordere Rille des Wechselkragens umgelegt. Die Einführöffnung bleibt dabei durch den abgebundenen Sackrest verschlossen. Ein neuer Kunststoffsack mit der vorher eingelegten neuen Filterpatrone wird in der nun frei gewordenen hinteren Rille des Wechselkragens 38 mit einer neuen Gummischnur bzw. Spannbügel befestigt. Danach wird der Sackrest einschließlich Gummischnur bzw. Spannbügel aus der vorderen Rille des Wechselkragens 38 gezogen und vor die neue Filterpatrone gebracht, wobei der neue Kunststoffsack dabei wie ein Handschuh benutzt wird. Die neue Filterpatrone wird in die Filterkammer eingeschoben und mit Hilfe des Spann- und/oder Verriegelungsmechanismus 27 fixiert, wie in der Fig. 4 gezeigt. Dabei wird automatisch das Kopfstück 22 der Filterpatrone 20 gegen den Dichtring gedrückt und am gegenüber liegenden Ende das Dichtblech 37 mit dem Dichtring 36 gegen den Dichtungsaufnahmering 35 gedrückt, sodass die Filterpatrone an beiden Enden staubdicht abgedichtet ist. Anschließend wird der Betrieb der Filterkammer erneut aufgenommen.

Wie der Fig. 9 entnommen werden kann, dient der Dichtungsaufnahmering 35 im Zusammenwirken mit der Filterpatrone 20 und dem Dichtblech 37 auch einer Zentrierung der Filterpatrone 20 im Bereich der Einführöffnung.

Die Stäube können teilweise brennbar und explosionsfähig sein, so dass zusätzlich Explosionsschutz der Filtermodule erforderlich ist. Dies wird erfindungsgemäß dadurch erzielt, dass durch die besondere Ausführung der Filterpatronen beim Einsetzen derselben diese zugleich als auf Zug verspannte Gehäuseverstärkungen gegen inneren Überdruck bei Druckstößen dienen, die auf die vordere Wand 6 bzw. das rückseitige Trennblech 9 (vgl. Fig. 1) einwirken, wie der Fig. 4 ohne weiteres entnommen werden kann.

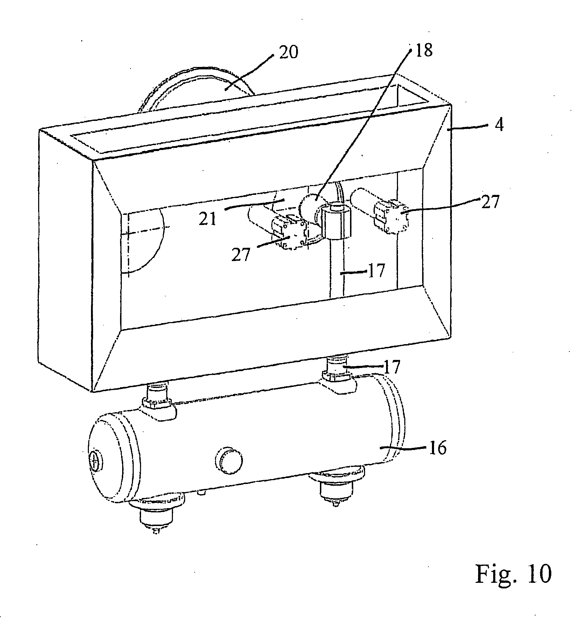

Die Fig. 10 zeigt die Anordnung und Versorgung der Injektordüse 18 zum Abreinigen einer Filterpatrone 20. Die Injektordüse 18 ist innerhalb der von einem Boden beziehungsweise Deckel des Filtermoduls, dem Trennblech 8 (vgl. Fig. 1) und Seitenwänden des Filtennoduls ausgebildeten Reingaskammer 4 angeordnet, und zwar mittig vor der Mündung 21 der Filterpatrone 20. Die Injektordüse 18 ist über eine Leitung 17 mit einem Behälter für Stickstoff oder Druckluft 16 oder mit einer Druckluftversorgung verbunden. Um einen kontinuierlichen Betrieb des Filtermoduls zu gewährleisten, werden die Filterpatronen 20 durch Druckstöße oder durch Blaswirkung, ausgeübt durch die Injektordüse 18, im Gegenstromprinzip abgereinigt. Im Betrieb bildet der heraus gefilterte Staub auf der Außenoberfläche der Filterpatrone 20 in der ersten Filterstufe 2 einen Staubkuchen. Druckluft bzw. ein Druckluftimpuls aus der Injektordüse 18 in einer Richtung entgegen gesetzt zur Strömungsrichtung des zu filternden Gases bewirkt ein Lösen des Filtermaterials von dem Zentrierkäfig, was aufgrund einer Verformung des Filtermaterials den Staubkuchen lockert, so dass die Staubpartikel über den Staubsammeltrichter 14 (vgl. Fig. 1) in den Sammelbehälter 15 herabfallen. Wiederholtes Anlegen von Druckimpulsen bewirkt eine Expansion und Kontraktion des Filtermaterials, was die Abreinigung des Staubkuchens beschleunigt.

Zum Wechseln des Staubsammelbehälters 15 (vgl. Fig. 1) wird ebenfalls die vorstehend beschriebene Sackwechseltechnik verwendet. Zu diesem Zweck ist das Rohranschlussstück 41 ebenfalls mit Rillen zur Aufnahme eines Gummibands bzw. Spannbügels versehen. Damit dieselben Hilfswerkzeuge sowohl zum Wechsel des Staubsammelbehälters 15 als auch zum Wechseln der Filterpatronen 20 verwendet werden können, können Geometrie und Größe bzw. Abmessungen des Wechselsack-Haltekragens 38 (vgl. Fig. 9) identisch zu Geometrie und Größe bzw. Abmessungen des Rohranschlussstücks 41 sein.

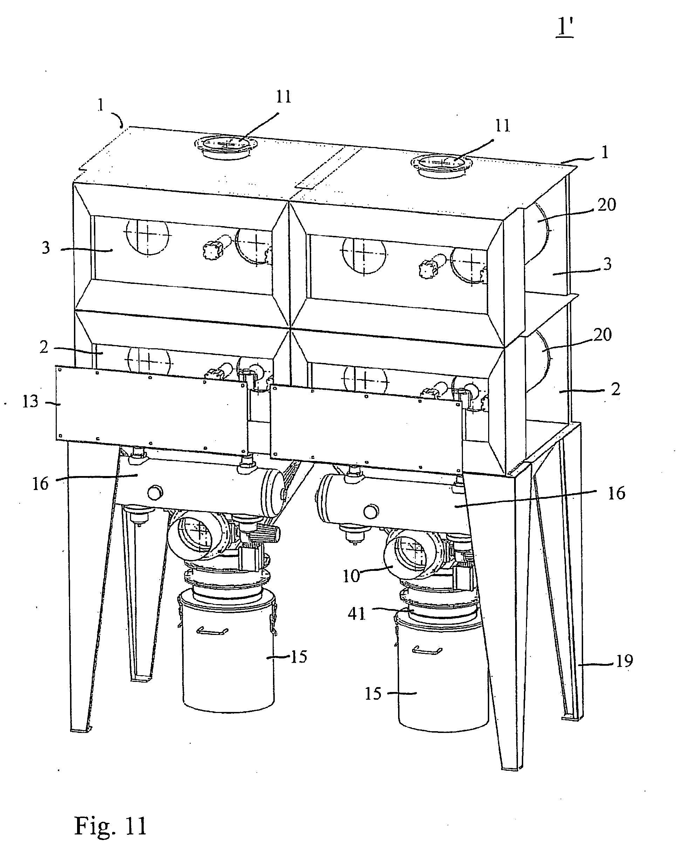

Die Fig. 11 zeigt eine aus zwei Filtermodulen 1, die wie vorstehend ausgebildet sind, gebildete Filteranlage 1'. Die Staubentsorgung erfolgt dabei jeweils in Staubsammelbehälter 15. Alternativ kann auch eine zentrale Staubentsorgung vorgesehen sein, mit einem größeren Staubsammelbehälter. Dazu können unterschiedliche Austragsorgane unter jedem Filtermodul angeordnet sein. Durch pneumatische oder mechanische Fördereinrichtungen können beliebig viele Module auf einen zentralen Sammelbehälter gefördert werden.

Mittels einer zentralen Steuereinrichtung, beispielsweise CPU, und Absperrventilen können die einzelnen Filtermodule 1 wahlweise aus dem zu filternden Gasstrom genommen und wieder hinzu geschaltet werden. Zur Abreinigung oder zum Wechsel der Filterpatronen 20 eines Filtermoduls 1 wird dieses zunächst aus dem zu filternden Gasstrom geschaltet. Zur Abreinigung wird Druckluft bzw. Druckluftimpulse über die Injektordüse an den Innenraum der Filterpatronen 20 angelegt. Da die Filtermodule 1 selektiv aus dem Gasstrom geschaltet werden können, kann die Sedimentation der Schwebstoffe während der Abreinigung ungehindert erfolgen. In diesem Zustand können auch die Filterpatronen von außerhalb des Filtermoduls 1 her gewechselt werden, wie vorstehend beschrieben. Anschließend kann der Betrieb des Filtermoduls 1 durch Aufschalten auf den zu reinigenden Gasstrom wieder aufgenommen werden.

Die erfindungsgemäße Filteranlage eignet sich für die kontinuierliche Entstaubung für Luftleistungen von beispielsweise 500 m³/h bis 30.000 m³/h für Filterklassen gemäß EN 1822 von besser als H10. Wie dem Fachmann beim Studium der vorstehenden Beschreibung ohne weiteres ersichtlich sein wird, können die Filtermodule erfindungsgemäß im Baukastenprinzip kundenspezifisch zusammengesetzt werden. So können bei vergleichsweise niedrigen Luftleistungen die Filterkammern nur eine Filterpatrone enthalten und können zwei Filterstufen übereinander angeordnet sein. Bei größeren Anlagen können die einzelnen Filterkammern zwei oder mehr horizontal nebeneinander angeordnete Filterpatronen enthalten, wie beispielhaft in der Fig. 1 dargestellt.

### Bezugszeichenliste

- 1/1': Filter- / Entstaubungsanlagen
- 2: Erste Filterstufe / -Kammer
- 3: Zweite Filterstufe / -Kammer
- 4: Reingaskammer
- 5: Innenwand des Staubsammeltrichters 14
- 6: Vordere Wand
- 7: Deckel
- 8: Trennblech
- 9: Rückseitiges Trennblech
- 10: Rohgaseinlass
- 11: Rohgasauslass
- 12: Öffnung
- 13: vorderer Deckel
- 14: Staubsammeltrichter
- 15: Staubsammelbehälter
- 16: Stickstoffbehälter / Druckluftquelle
- 17: Leitung
- 18: Injektordüse
- 19: Gestell
- 20: Filterpatrone
- 21: Mündungsbereich der Filterpatrone
- 22: Kopfstück
- 23: Öffnung
- 25: Zentrierkäfig / -zylinder
- 26: Boden
- 27: Spann- bzw. Verriegelungsmechanismus
- 28: Gehäuse
- 29: Druckfeder
- 30: Stange
- 31: Spann- bzw. Verriegelungsklaue
- 32: Dichtung
- 33: Dichtsitzprüfnut
- 34: Filterwechselöffnung
- 35: Aufnahmering
- 36: Dichtung
- 37: Dichtblech
- 38: Wechselsack-Haltekragen
- 39: Sicke/Nut
- 40: Abdeckung
- 41: Rohranschlussstück

## Patentansprüche

1. Filtervorrichtung zum Entfernen von Feinstäuben aus einem staubbeladenen Gasstrom, mit zumindest zwei nacheinander von dem Gasstrom durchströmten Filterkammern (2, 3), in denen jeweils zumindest ein wechselbares Filterelement zum Filtern des Gasstroms vorgesehen ist, wobei die Filterelemente als zylindrische Filterpatronen (20) ausgebildet sind, die von außerhalb der Filtervorrichtung (1) her unmittelbar in die Filterkammern (2, 3) einsetzbar und herausnehmbar sind, **dadurch gekennzeichnet, dass** die Filterkammern (2, 3) über ein Trennblech (8) voneinander getrennt sind, wobei die Filterpatronen (20) in den Filterkammern (2, 3) sowohl zu einer roh- oder reingasseitigen Gehäusewand (9, 6) als auch zur Umgebung hin abgedichtet angeordnet sind, um an den beiden Enden der Filterpatronen (20) einen abgedichteten Sitz zu bewirken, sodass diese an den beiden Enden in den Filterkammern (2, 3) fixiert und staubdicht abgedichtet sind, und wobei an einem Ende der Filterpatronen (20) ein Verschlussdeckel (37) fest mit diesen verbunden ist, um diese gegen die Umgebung hin abzudichten.

2. Filtervorrichtung nach Anspruch 1, wobei die Filterpatronen (20) in unmittelbar aufeinander folgenden Filterkammern in umgekehrter Richtung durchströmt sind.

3. Filtervorrichtung nach Anspruch 2, bei der die Filterpatrone(n) (20) in einer ersten Filterkammer (2) von außen nach innen und die Filterpatrone(n) (20) in einer unmittelbar auf die erste Filterkammer folgenden zweiten Filterkammer (3) in umgekehrter Richtung durchströmt werden.

4. Filtervorrichtung nach einem der vorhergehenden Ansprüche, wobei an einem Ende der Filterpatronen (20) für den Gasstrom ein Einlass bzw. Auslass in den bzw. aus dem Innenraum der Filterpatronen vorgesehen ist.

5. Filtervorrichtung nach einem der vorhergehenden Ansprüche, wobei dort, wo die Filterpatronen zur Umgebung hin abgedichtet sind, ein abnehmbarer Verschlussdeckel (40) und/oder eine Vorrichtung zum berührungs- und kontaminationsfreien Wechsel einer verbrauchten Filterpatrone vorgesehen ist.

6. Filiervorrichtung nach einem der vorhergehenden Ansprüche, bei der die Filterpatronen (20) an zumindest einem Ende mittels eines Spann- und/oder Verricgelungsniechanismus (27), der von außerhalb der jeweiligen Filterkammer (2, 3) her betätigbar ist, gegen eine zugeordnete Wand (9, 6) der Filterkammer vorgespannt gehalten sind.

7. Filtervorrichtung nach Anspruch 6, wobei auf einem stirnseitigen Umfangsrand an dem jeweiligen Ende der Filterpatrone (20), gegenüber liegend dem Spann- und/oder Verriegelungsmechanismus (27), eine Mehrzahl von Ausnehmungen (23) oder Vorsprüngen vorgesehen sind, die mit korrespondierend ausgebildeten Verricgelungsklauen (31) oder Verriegelungsaufnahmen des Spann- und/oder Verriegelungsmechanismus (27) zusammenwirken, um das jeweilige Ende an der zugeordneten Wand (9, 6) zu fixieren, wobei zwischen dem stirnseitigen Umfangsrand (27) und der zugeordneten Wand (9, 6) ein Dichtungselement (32) vorgesehen ist, um einen Filterinnenraum (21) gegen die zugeordnete Filterkammer (2, 3) abzudichten.

8. Filtervorrichtung nach Anspruch 6 oder 7, wobei an der zugeordneten Wand (9, 6) im Bereich des Dichumpselements (32) eine Dichtsitzprüfeinrichtung (33), insbesondere eine mit einem Über- oder Unterdruck beaufschlagbare Ringnut, vorgesehen ist.

9. Filtervorrichtung nach einem der Ansprüche 6 bis 8, wobei der Spann- und/oder Verriegelungsmechanismus (27) eine von außerhalb der Filterkammer (2, 3) betätigbare mechanische oder pneumatische Spannvorrichtung (27) umfasst, um das jeweilige Ende der Filterpatrone (20) gegen die zugeordnete Wand (9, 6) vorzuspannen.

10. Filtervorrichtung nach einem der Ansprüche 6 bis 9, wobei der Verschlussdeckel (37) an dem dem Spann- und/oder Verriegelungsmeclianismus (27) gegenüber liegenden Ende der Filterpatrone (20) fest mit dieser verbunden ist und wobei ferner ein Dichtmittel (35, 36) zum Abdichten des gegenüber liegenden Endes der Filterpatronen (20) gegen die Filterkammer (2, 3) vorgesehen ist.

11. Filtervorrichtung nach Anspruch 10, wobei das Dichtmittel einen an der Filterpatrone (20) vorgesehenen Dichtring (36) und einen an der zugeordneten Wand vorgesehenen Dichtungsaufnahmering (35) umfasst, der einwärts geneigt ist, sodass durch Betätigen des Spann- und/oder Verriegelungsmechanismus (27) beide Enden der Filterpatrone gegen die zugeordneten Wände (6, 9) gespannt gehalten sind und die Filterpatrone (20) als Zuganker gegen inneren Überdruck wirkt.

12. Filtervorrichtung nach einem der Ansprüche 6 bis 11, bei der an dem dem Spann- und/oder Verriegelungsmechanismus (27) gegenüber liegenden Ende der Filterpatrone (20) ein umlaufender Wechselsack-Haltekragen (38) zum berührungs- und kontaminationsfreien Wechsel einer verbrauchten Filterpatrone vorgesehen ist und die Filtervorrichtung (1) einen Staubsammelbehälter (15) aufweist, der über ein Rohranschlussstück (41) mit einem unteren Ende der Filtervorrichtung, insbesondere mit einem Staubsammeltrichter (14), verbunden ist, wobei Geometrie und Größe des Rohranschlussstückes gleich derjenigen des Wechselsack-Haltekragens (38) ist.

13. Filtervorrichtung nach einem der vorhergehenden Ansprüche, wobei zumindest in einer ersten Filterkammer (2) im Mündungsbereich (21) der Filterpatronen (20) eine Blasvorrichtung, insbesondere eine Injektordüse (18), vorgesehen ist, um zur Reinigung der jeweiligen Filterpatrone ein Gas entgegen gesetzt zur Strömungsrichtung des zu filternden Gasstroms in einen Innenraum der Filterpatrone einzublasen.

14. Filtervorrichtung nach Anspruch 13, bei der die Blasvorrichtung (18) in einer Verbindungskammer (4) angeordnet ist, die über eine Trennwand (9) von der zugeordneten Filterkammer (2) getrennt ist, wobei in der Trennwand (9) eine Öffnung (12) ausgebildet ist, über welche die Verbindungskammer (4) mit der zugeordneten Filterkammer (2) kommuniziert.

15. Filteranlage (1') mit mehreren Filtervorrichtungen (1) nach einem der vorhergehenden Ansprüche, wobei den Filtervorrichtungen (1) jeweils Absperrventile zum wahlweisen Absperren der Filtervorrichtungen (1) zugeordnet sind und eine zentrale Steuereinrichtung vorgesehen ist, die ausgelegt ist, um durch selektives Betätigen der Absperrventile den Gasstrom durch eine Filtervorrichtung zur Abreinigung der Filterpatronen dieser Filtervorrichtung abzusperren und wieder frei zu geben.

## Claims

1. Filter device for removing fine dust from a gas flow laden with dust, having at least two filter chambers (2, 3) which are flowed through in succession by the gas flow and in which respectively at least one exchangeable filter element is provided for filtering the gas flow, the filter elements being configured as cylindrical filter cartridges (20) which can be inserted directly into and removed from the filter chambers (2, 3) from outside the filter device (1), **characterised in that** the filter chambers (2, 3) are separated from each other via a separating metal sheet (8), the filter cartridges (20) being disposed sealed in the filter chambers (2, 3) both relative to a dirty- or clean gas-side housing wall (9, 6) and relative to the outside environment, in order to effect a sealed seat at the two ends of the filter cartridges (20), so that the latter are fixed at the two ends in the filter chambers (2, 3) and sealed in a dust-tight manner and a closing cover (37) being connected securely at one end of the filter cartridges (20) to the latter in order to seal the latter against the outside environment.

2. Filter device according to claim 1, the filter cartridges (20) being flowed through in reverse direction in directly successive filter chambers.

3. Filter device according to claim 2, in which the filter cartridge(s) (20) in a first filter chamber (2) are flowed through from the exterior to the interior and the filter cartridge(s) (20) in a second filter chamber (3) which directly succeeds the first filter chamber are flowed through in reverse direction.

4. Filter device according to one of the preceding claims, an inlet or outlet being provided for the gas flow, at one end of the filter cartridges (20), into or out of the interior of the filter cartridges.

5. Filter device according to one of the preceding claims, a removable closing cover (40) and/or a device for contact- and contamination-free exchange of a used filter cartridge being provided wherever the filter cartridges are sealed relative to the outside environment.

6. Filter device according to one of the preceding claims, in which the filter cartridges (20) are retained pretensioned against an assigned wall (9, 6) of the filter chamber at at least one end by means of a tensioning and/or locking mechanism (27) which can be actuated from outside the respective filter chamber (2, 3).

7. Filter device according to claim 6, a plurality of recesses (23) and/or projections being provided on an end-side circumferential edge at the respective end of the filter cartridge (20), situated opposite the tensioning and/or locking mechanism (27), which recesses or projections cooperate with correspondingly configured locking claws (31) and/or locking receiving means (27) of the tensioning and/or locking mechanism (27) in order to fix the respective end on the assigned wall (9, 6), a sealing element (32) being provided between the end-side circumferential edge (27) and the assigned wall (9, 6) in order to seal a filter interior (21) against the assigned filter chamber (2, 3).

8. Filter device according to claim 6 or 7, a seal seat testing device (33), in particular an annular groove which can be subjected to an excess or low pressure, being provided on the assigned wall (9, 6) in the region of the sealing element (32).

9. Filter device according to one of the claims 6 to 8, the tensioning and/or locking mechanism (27) comprising a mechanical or pneumatic tensioning device (27) which can be actuated from outside the filter chamber (2, 3) in order to pretension the respective end of the filter cartridge (20) against the assigned wall (9,6).

10. Filter device according to one of the claims 6 to 9, the closing cover (37) being connected securely to the filter cartridge (20) on the end of the latter which is situated opposite the tensioning and/or locking mechanism (27) and in addition a sealing means (35, 36) being provided in order to seal the oppositely situated end of the filter cartridge (20) against the filter chamber (2, 3).

11. Filter device according to claim 10, the sealing means comprising a sealing ring (36), which is provided on the filter cartridge (20), and a seal receiving ring (35) which is provided on the assigned wall and is inclined inwards so that, by actuation of the tensioning and/or locking mechanism (27), both ends of the filter cartridge are retained tensioned against the assigned walls (6, 9) and the filter cartridge (20) acts as a tension rod against internal excess pressure.

12. Filter device according to one of the claims 6 to 11, in which a circumferential exchange bag retaining collar (38) is provided on the end of the filter cartridge (20) which is situated opposite the tensioning and/or locking mechanism (27) for contact- and contamination-free exchange of a used filter cartridge, and the filter device (1) has a dust collection container (15) which is connected via a pipe connection piece (41) to a lower end of the filter device, in particular to a dust collection funnel (14), the geometry and size of the pipe connection piece being the same as that of the exchange sack retaining collar (38).

13. Filter device according to one of the preceding claims, a blowing device, in particular an injector nozzle (18), being provided at least in a first filter chamber (2) in the opening region (21) of the filter cartridges (20), in order to blow in a gas contrary to the flow direction of the gas flow which is to be filtered into an interior of the filter cartridge in order to clean the respective filter cartridge.

14. Filter device according to claim 13, in which the blowing device (18) is disposed in a connecting chamber (4) which is separated from the assigned filter chamber (2) by a separating wall (9), an opening (12) being configured in the separating wall (9), via which the connecting chamber (4) communicates with the assigned filter chamber (2).

15. Filter system (1') having a plurality of filter devices (1) according to one of the preceding claims, stop valves for optional blocking of the filter devices (1) being assigned to the filter devices (1) respectively, and a central control device being provided which is designed, by means of selective actuation of the stop valves, to block the gas flow through a filter device and to release it again in order to clean the filter cartridges of this filter device.

## Revendications

1. Dispositif de filtrage destiné à supprimer des poussières fines d'un flux de gaz chargé en poussière, comportant au moins deux chambres de filtrage (2, 3) traversées l'une après l'autre par le flux de gaz, dans lesquelles respectivement au moins un élément de filtrage pouvant être changé servant à filtrer le flux de gaz est prévu, les éléments de filtrage étant réalisés sous la forme de cartouches de filtrage (20) cylindriques, lesquelles peuvent être retirées du dispositif de filtrage (1) pour être directement placées dans les chambres de filtrage (2, 3), **caractérisé en ce que** les chambres de filtrage (2, 3) sont séparées les unes des autres par l'intermédiaire d'une tôle de séparation (8), les cartouches de filtrage (20) étant disposées de manière étanche dans les chambres de filtrage (2, 3) aussi bien par rapport à une paroi de boîtier (9, 6) côté gaz purifié ou côté gaz brut que par rapport à l'environnement afin d'obtenir un siège étanchéifié au niveau des deux extrémités des cartouches de filtrage (20), de sorte que celles-ci sont fixées dans les chambres de filtrage (2, 3) au niveau des deux extrémités et sont rendues étanches à la poussière, et un couvercle de fermeture (37) est fixement relié au niveau d'une extrémité des cartouches de filtrage (20) à ces dernières afin de les rendre étanches à l'environnement.

2. Dispositif de filtrage selon la revendication 1, les cartouches de filtrage (20) étant traversées en direction opposée dans des chambres de filtrage se suivant directement les unes après les autres.

3. Dispositif de filtrage selon la revendication 2, dans le cadre duquel la/les cartouche(s) de filtrage (20) est/sont traversée(s) depuis l'extérieur vers l'intérieur dans une première chambre de filtrage (2) puis est/sont traversée(s) dans le sens opposé dans une seconde chambre de filtrage (3) suivant directement la première chambre de filtrage.

4. Dispositif de filtrage selon l'une quelconque des revendications précédentes, une entrée et/ou une sortie étant prévue(s) dans et/ou depuis l'espace intérieur des cartouches de filtrage au niveau d'une extrémité des cartouches de filtrage (20) pour le flux de gaz.

5. Dispositif de filtrage selon l'une quelconque des revendications précédentes, un couvercle de fermeture (40) pouvant être retiré et/ou un dispositif servant à changer sans contact et sans contamination une cartouche de filtrage usagée étant prévu(s) précisément à l'emplacement où les cartouches de filtrage sont rendues étanches à l'environnement.

6. Dispositif de filtrage selon l'une quelconque des revendications précédentes, dans le cadre duquel les cartouches de filtrage (20) sont maintenues prétendues contre une paroi (9, 6) associée de la chambre de filtrage au niveau d'au moins une extrémité au moyen d'un mécanisme de serrage et/ou de verrouillage (27), lequel mécanisme peut être activé depuis l'extérieur de chacune des chambres de filtrage (2, 3).

7. Dispositif de filtrage selon la revendication 6, une pluralité d'évidements (23) ou de saillies étant prévus sur le bord périphérique côté frontal au niveau de l'extrémité respective de la cartouche de filtrage (20), faisant face au mécanisme de serrage et/ou de verrouillage (27), lesquels interagissent avec des griffes de verrouillage (31) réalisées de manière correspondante ou avec des logements de verrouillage du mécanisme de serrage et/ou de verrouillage (27) afin de fixer l'extrémité respective au niveau de la paroi associée (9, 6), un élément d'étanchéité (32) étant prévu entre le bord périphérique côté frontal (27) et la paroi associée (9, 6) afin de rendre étanche l'espace intérieur de filtrage (21) par rapport à la chambre de filtrage (2, 3) associée.

8. Dispositif de filtrage selon la revendication 6 ou 7, un système de test du siège d'étanchéité (33), en particulier une rainure annulaire pouvant être alimentée par une surpression ou une dépression, étant prévu au niveau de la paroi associée (9, 6) dans la zone de l'élément d'étanchéité (32).

9. Dispositif de filtrage selon l'une quelconque des revendications 6 à 8, le mécanisme de serrage et/ou de verrouillage (27) comportant un dispositif de serrage (27) mécanique ou pneumatique pouvant être actionné depuis l'extérieur de la chambre de filtrage (2, 3), afin de prétendre l'extrémité respective de la cartouche de filtrage (20) par rapport à la paroi (9, 6) associée.

10. Dispositif de filtrage selon l'une quelconque des revendications 6 à 9, le couvercle de fermeture (37) étant fixement relié au niveau de l'extrémité de la cartouche de filtrage (20) faisant face au mécanisme de serrage et/ou de verrouillage (27) à ladite cartouche et un moyen d'étanchéité (35, 36) étant en outre prévu contre la chambre de filtrage (2, 3) pour étanchéifier l'extrémité faisant face à la cartouche de filtrage (20).

11. Dispositif de filtrage selon la revendication 10, le moyen d'étanchéité comportant un anneau d'étanchéité (36) prévu au niveau de la cartouche de filtrage (20) et un anneau de réception d'étanchéité (35) prévu au niveau de la paroi associée, lequel anneau est incliné vers l'intérieur de sorte que grâce à l'activation du mécanisme de serrage et/ou de verrouillage (27), deux extrémités de la cartouche de filtrage sont maintenues serrées contre la paroi (6, 9) associée et de sorte que la cartouche de filtrage (20) agit en tant que tirant contre la surpression intérieure.

12. Dispositif de filtrage selon l'une quelconque des revendications 6 à 11, dans le cadre duquel un crochet de maintien rotatif du sachet de rechange (38) servant à changer sans contact et sans contamination la cartouche de filtrage usagée est prévu au niveau de l'extrémité de la cartouche de filtrage (20) faisant face au mécanisme de serrage et/ou de verrouillage (27) et le dispositif de filtrage (1) présente un réservoir de collecte de poussière (15) qui est relié par l'intermédiaire d'une pièce de raccordement tubulaire (41) à l'extrémité inférieure du dispositif de filtrage, en particulier à l'entonnoir de collecte de la poussière (14), la géométrie et les dimensions de la pièce de raccordement tubulaire étant identiques à celles du crochet de maintien du sachet de rechange (38).

13. Dispositif de filtrage selon l'une quelconque des revendications précédentes, un dispositif pneumatique, en particulier une buse à injection (18), étant prévu au moins dans la première chambre de filtrage (2) dans la zone d'embouchure (21) des cartouches de filtrage (20), afin d'insuffler dans un espace intérieur de la cartouche de filtrage un gaz dans le sens opposé au sens d'écoulement du flux de gaz à filtrer afin de nettoyer la cartouche de filtrage respective.

14. Dispositif de filtrage selon la revendication 13, dans le cadre duquel le dispositif de soufflage (18) est disposé dans une chambre de raccordement (4), laquelle est séparée de la chambre de filtrage (2) associée par l'intermédiaire d'une paroi de séparation (9), une ouverture (12) étant réalisée dans la paroi de séparation (9) par l'intermédiaire de laquelle la chambre de raccordement (4) communique avec la chambre de filtrage (2) associée.

15. Installation de filtrage (1') comportant plusieurs dispositifs de filtrage (1) selon l'une quelconque des revendications précédentes, des soupapes d'arrêt pour une obturation du dispositif de filtrage (1) au choix étant respectivement affectées aux dispositifs de filtrage (1) et un dispositif de commande central étant prévu, qui est mis au point afin de bloquer grâce à une activation sélective des soupapes d'arrêt le flux de gaz à travers un dispositif de filtrage afin de nettoyer les cartouches de filtrage du présent dispositif de filtrage et de libérer à nouveau ledit flux de gaz.
